# EUROPEAN PATENT APPLICATION

(11) **EP 4 386 842 A1**
(43) Date of publication of application: **19.06.2024**
(21) Application number: 23196236.6
(22) Date of filing: 08.09.2023
(51) Int. Cl.: H01L 27/02, G06F 30/392, H01L 23/528, H01L 27/118

(54) **SEMICONDUCTOR INTEGRATED CIRCUIT, LAYOUT DESIGN SYSTEM, LAYOUT DESIGNING METHOD, AND NON-TRANSITORY COMPUTER-READABLE STORAGE MEDIUM STORING PROGRAM**

(30) Priority: 12.12.2022 JP 2022197932
(71) Applicant: Kioxia Corporation, Tokyo (JP)
(72) Inventor: Kohara, Koji, Tokyo (JP)
(74) Representative: Hoffmann Eitle

(57) **Abstract**

According to one embodiment, a semiconductor integrated circuit includes: a first power supply line extending in a first direction; a second power supply line extending in the first direction parallel to the first power supply line; a block circuit disposed between the first and second power supply lines, and comprising a first logic circuit to which first and second inputs are supplied, a second logic circuit to which third and fourth inputs are supplied, and a third logic circuit to which outputs from the first and second logic circuits are supplied; a first wiring extending in a second direction orthogonal to the first direction; and a second wiring extending in the second direction parallel to the first wiring. Any one of the first or second input is connected to the first wiring, and any one of the third or fourth input is connected to the second wiring.

## Description

### CROSS REFERENCE TO RELATED APPLICATIONS

This application is based upon and claims the benefit of priority from prior Japanese Patent Application No. P2022-197932 filed on December 12, 2022.

### FIELD

Embodiments described herein relate generally to a semiconductor integrated circuit, a layout design system, a layout designing method, and a non-transitory computer-readable storage medium storing program.

### BACKGROUND

A standard cell method has been used in design of semiconductor integrated circuits. However, in the standard cell method, since basic unit cells have simple logic functions and perform automatic wiring connection between these basic unit cells, which could cause wiring congestion if the number of terminals is increased.

### BRIEF DESCRIPTION OF THE DRAWINGS

Fig. 1A is a connecting configuration diagram illustrating an AOI circuit applied to a semiconductor integrated circuit according to a first embodiment.
Fig. 1B is a logic circuit diagram illustrating the semiconductor integrated circuit according to the first embodiment.
Fig. 2A is a layout diagram illustrating a block circuit according to the first embodiment.
Fig. 2B is a layout diagram illustrating the semiconductor integrated circuit according to the first embodiment.
Fig. 3 is a cross-sectional diagram taken in the line X1-X1 of Fig. 2B.
Fig. 4 is a cross-sectional diagram taken in the line X2-X2 of Fig. 2B.
Fig. 5 is a cross-sectional diagram taken in the line Y1-Y1 of Fig. 2B.
Fig. 6 is a schematic diagram illustrating a layout of the semiconductor integrated circuit illustrated in Fig. 2B.
Fig. 7 is a logic circuit diagram illustrating a semiconductor integrated circuit according to a second embodiment.
Fig. 8 is a layout diagram illustrating the semiconductor integrated circuit according to the second embodiment.
Fig. 9 is a layout diagram illustrating a semiconductor integrated circuit according to a third embodiment.
Fig. 10 is a cross-sectional diagram taken in the line X3-X3 of Fig. 9.
Fig. 11 is a cross-sectional diagram taken in the line Y2-Y2 of Fig. 9.
Fig. 12 is a schematic diagram of a layout of the semiconductor integrated circuit illustrated in Fig. 9.
Fig. 13 is a layout diagram illustrating a semiconductor integrated circuit according to a fourth embodiment.
Fig. 14 is a cross-sectional diagram taken in the line X4-X4 of Fig. 13.
Fig. 15 is a schematic diagram of a layout of the semiconductor integrated circuit illustrated in Fig. 13.
Fig. 16 is a schematic diagram illustrating a layout design system using the semiconductor integrated circuit according to embodiments.
Fig. 17 is a block configuration diagram illustrating the layout design system illustrated in Fig. 16.
Fig. 18 is a flow chart illustrating a layout designing method using the semiconductor integrated circuit according to the embodiments.
Fig. 19A is a circuit representation of a 4-bit width two-input multiplexer (MUX).
Fig. 19B is a truth table of the MUX illustrated in Fig. 19A.
Fig. 19C is a cell connection diagram after performing logic synthesis of the MUX illustrated in Fig. 19A.
Fig. 20 is a layout schematic diagram illustrating the cell after performing an automatic wiring connection between cells.
Fig. 21A is a cell connection diagram describing replacing terminals to be supplied into an AND circuit.
Fig. 21B is a cell connection diagram after the terminal replacement of the cell illustrated in Fig. 21A.
Fig. 22A is a configuration diagram of a cell to be extracted.
Fig. 22B is a configuration diagram of a cell after the replacement.
Fig. 23 is a layout diagram after the cell replacement.

### DETAILED DESCRIPTION

Certain embodiments will now be explained with reference to drawings. In the description of the following drawings to be described, the identical or similar reference sign is attached to the identical or similar part and the description thereof is omitted. However, the drawings are merely schematic.

Moreover, the embodiments described hereinafter merely exemplify the device and method for materializing the technical idea; and the embodiments do not specify the material, shape, structure, placement, etc. of each component part as the following. The embodiments may be changed without departing from the spirit or scope of claims.

Certain embodiments provide a semiconductor integrated circuit, a layout design system, a layout designing method, and a non-transitory computer-readable storage medium storing program, capable of relieving wiring congestion.

In general, according to the embodiment, a semiconductor integrated circuit comprises: a first power supply line extending in a first direction; a second power supply line extending in the first direction parallel to the first power supply line; a block circuit disposed between the first power supply line and the second power supply line, the block circuit comprising a first logic circuit to which a first input and a second input are supplied, a second logic circuit to which a third input and a fourth input are supplied, and a third logic circuit to which an output from the first logic circuit and an output from the second logic circuit are supplied; a first wiring extending in a second direction orthogonal to the first direction; and a second wiring extending in the second direction parallel to the first wiring, wherein any one of the first input or the second input is connected to the first wiring, in the first logic circuit, and any one of the third input or the fourth input is connected to the second wiring, in the second logic circuit.

Hereinafter, the semiconductor integrated circuit, the layout design system, the layout designing method, and the non-transitory computer-readable storage medium storing program of the present disclosure will be described with reference to the drawings.

### [First Embodiment]

### (Configuration of Semiconductor Integrated Circuit)

For memory controllers using multiplexers (MUXs), multi-bit width multiplexer (MUX) select logic is used. For example, Error-Correcting Code (ECC) circuits provided in NAND memory controllers uses multi-bit width MUX select logic. Logic synthesis of the MUX selecting logic results in a combinational circuit of a plurality of AND OR INVERTER (AOI) cells and a decoder. For example, since the AOI cell having five terminals per one cell includes many terminals causes wiring congestion, but in the case of the MUX selecting logic, there are terminals into which a common signal is supplied in the plurality of AOI cells.

According to a logic circuit of the semiconductor integrated circuit according to the present embodiment, wiring congestion can be relieved by providing a cell in which wiring of the signal is arranged in advance.

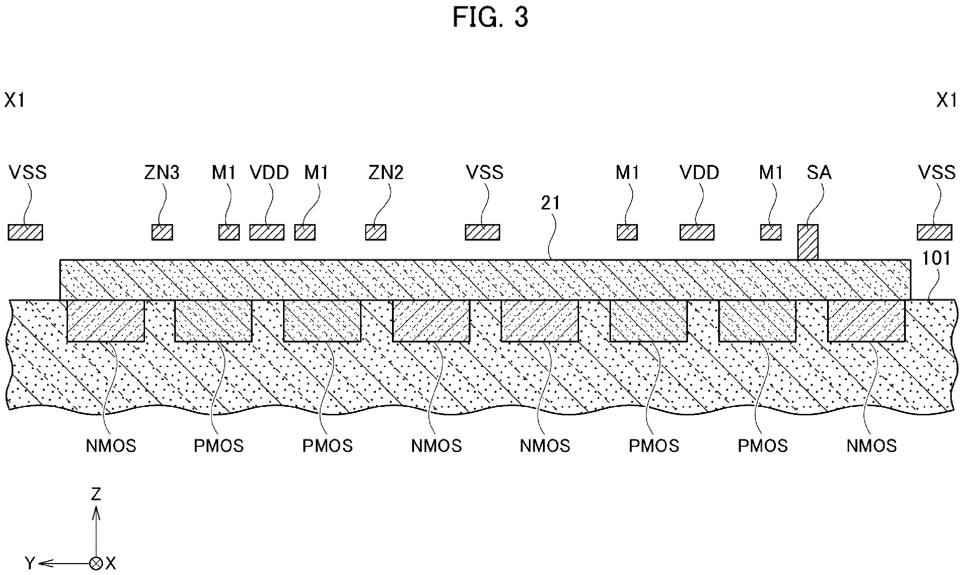

In the following description, an XYZ coordinate system, which is an example of an orthogonal coordinate system, is used. More specifically, the plane parallel to a surface of a substrate 101 constituting a semiconductor integrated circuit 100 is X-Y plane and the direction orthogonal to the X-Y plane is the Z direction. Moreover, the X-axis and the Y-axis are two directions orthogonal to each other in the X-Y plane. It is to be noted that illustration of an interlayer insulating film is omitted in Figs. 3-5, 10, 11, and 14. Illustration of a gate oxide film is omitted in Figs. 3, 5, 10, 11, and Fig. 14. The X direction is also referred to as a first direction and the Y direction as a second direction. In layout diagrams, a first power supply line extending in the X direction is also referred to as VDD and a second power supply line extending in the X direction parallel to the VDD is also referred to as VSS. Moreover, a region where an n-Channel Metal-Oxide Semiconductor (NMOS) transistor is disposed is also referred to as NMOS, and a region where a p-Channel Metal-Oxide Semiconductor (PMOS) transistor is disposed is also referred to as PMOS.

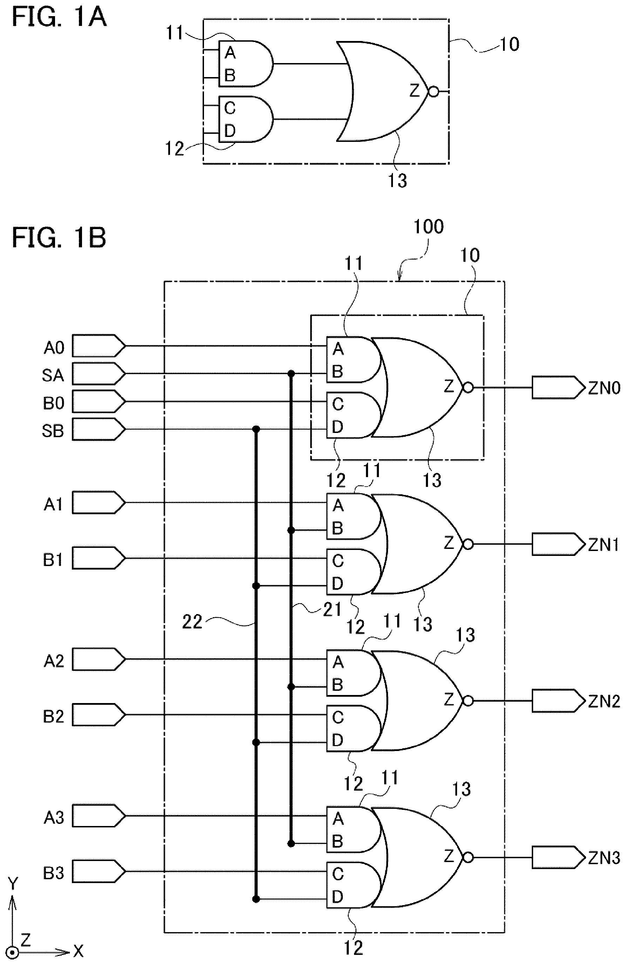

Fig. 1A is a connecting configuration diagram illustrating an AOI circuit applied to a semiconductor integrated circuit according to a first embodiment. The AOI circuit constitutes a block circuit 10. The block circuit 10 includes AND circuits 11 and 12, which are respectively examples of a first logic circuit 11 and a second logic circuit, and a NOR circuit 13, which is an example of a third logic circuit. In the following description, the first logic circuit 11 and the second logic circuit are described as the AND circuits 11 and 12, and the third logic circuit 13 is described as the NOR circuit 13.

In Fig. 1A, although connection wiring between the AND circuits 11 and 12 and the NOR circuit 13 in the block circuit 10 is illustrated, in Fig. 1B and thereafter, illustration of connection wiring between the AND circuits 11 and 12 and the NOR circuit 13 in the block circuit 10 is omitted.

The AND circuit 11 uses, as input signals, a first input supplied into an A terminal, and a second input supplied into a B terminal. Moreover, any one of the first input or the second input is electrically connected to a first wiring 21 (Fig. 1B).

The AND circuit 12 uses, as input signals, a third input supplied into a C terminal, and a fourth input supplied into a D terminal. Moreover, any one of the third input or the fourth input is electrically connected to a second wiring 22 (Fig. 1B).

The NOR circuit 13 uses, as input signals, outputs from the AND circuit 11 and the AND circuit 12.

Fig. 1B is a logic circuit diagram illustrating the semiconductor integrated circuit 100 according to the first embodiment. As illustrated in Fig. 1B, the semiconductor integrated circuit 100 according to the first embodiment includes a plurality of block circuits 10, a first wiring 21, and a second wiring 22.

The semiconductor integrated circuit 100 can be applied to a circuit and the like configured to select and provide one signal from a plurality of signals. Specifically, a multiplexer (MUX) circuit and the like are listed, for example. An example of including four block circuits 10 is illustrated in Fig. 1B.

Any one of the first input or the second input in each of the plurality of AND circuits 11 is commonly connected to the first wiring 21. That is, any one of the A terminal or the B terminal in each of the plurality of AND circuits 11 is commonly connected to the first wiring 21. Moreover, the first wiring 21 is extended in the Y direction, as illustrated in Fig. 1B.

Any one of the third input or the fourth input in each of the plurality of AND circuits 12 is commonly connected to the second wiring 22. That is, any one of the C terminal or the D terminal in each of the plurality of AND circuits 12 is commonly connected to the second wiring 22. Moreover, the second wiring 22 is extended in the Y direction parallel to the first wiring 21, as illustrated in Fig. 1B.

The A terminals of the plurality of AND circuits 11 are respectively electrically connected to an A0 terminal to an A3 terminal. For example, separate signals (D₀[0] to D₀[3]) may be respectively supplied into the A0 terminal to the A3 terminal. The B terminal of each of the plurality of AND circuits 11 is electrically connected to an SA terminal through the first wiring 21. More specifically, a common signal is supplied into each of the B terminals of the plurality of AND circuits 11 from the SA terminal through the first wiring 21.

The C terminals of the plurality of AND circuits 12 are respectively electrically connected to an B0 terminal to an B3 terminal. For example, separate signals (D₁[0] to D₁[3]) may be respectively supplied into the B0 terminal to the B3 terminal. The C terminal of each of the plurality of AND circuits 12 is electrically connected to an SB terminal through the second wiring 22. More specifically, a common signal is supplied into each of the D terminals of the plurality of AND circuits 12 from the SB terminal through the first wiring 22.

Output terminals of the plurality of NOR circuits 13 are respectively electrically connected to a ZN0 terminal to a ZN3 terminal.

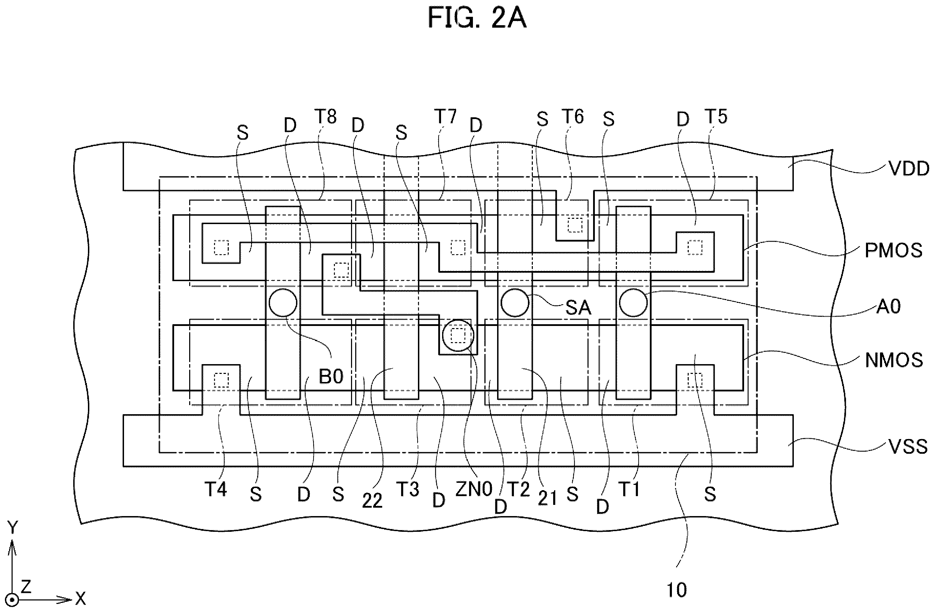

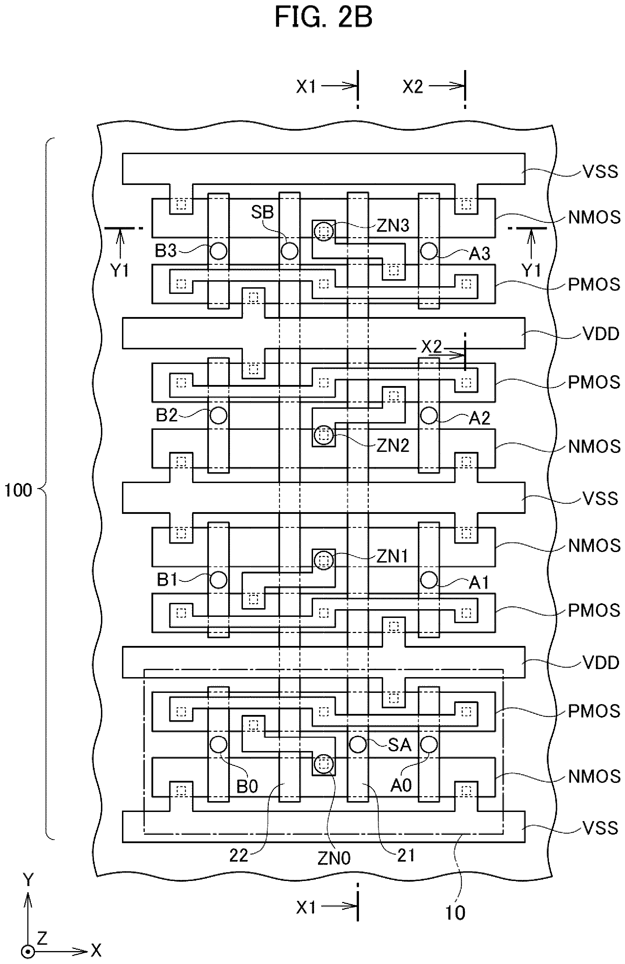

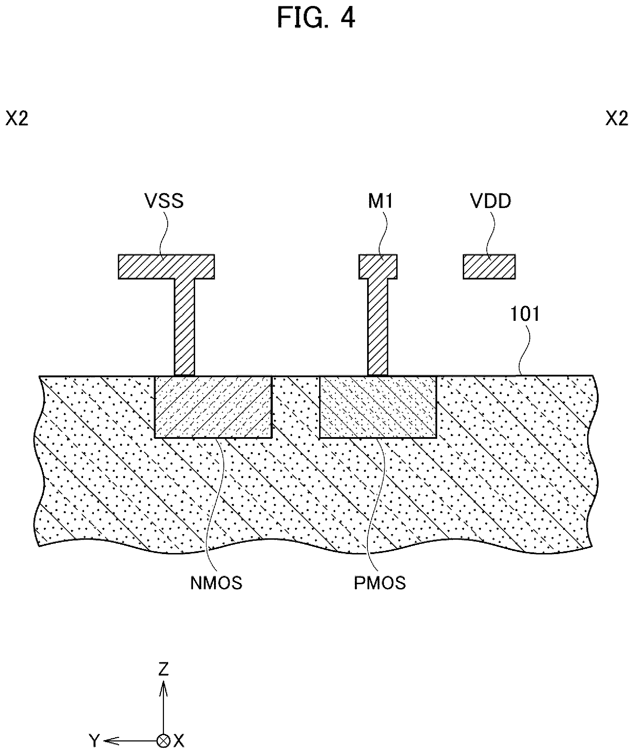

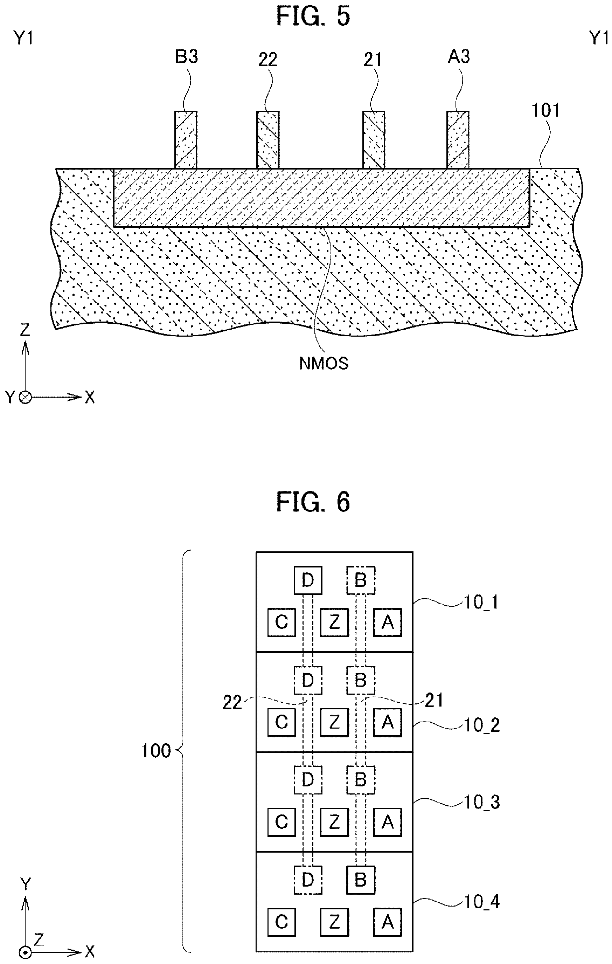

Fig. 2A is a layout diagram illustrating a block circuit 10 according to the first embodiment. Fig. 2B is a layout diagram illustrating the semiconductor integrated circuit 100 according to the first embodiment. Fig. 3 is a cross-sectional diagram taken in the line X1-X1 of Fig. 2B. Fig. 4 is a cross-sectional diagram taken in the line X2-X2 of Fig. 2B. Fig. 5 is a cross-sectional diagram taken in the line Y1-Y1 of Fig. 2B. Fig. 6 is a schematic diagram of a layout the semiconductor integrated circuit illustrated in Fig. 2B.

As illustrated in Fig. 2A, the block circuit 10 illustrated in Fig. 1B is composed of four NMOSs T1 to T4 and four PMOSs T5 to T8 in the layout. Reference sign S denotes a source and reference sign D denotes a drain of each transistor (NMOSs T1 to T4, PMOSs T5 to T8). Specifically, transistors having gates connected to the A0 terminal respectively constitutes the NMOS T1 and the PMOS T5. Transistors having gates connected to the SA terminal respectively constitutes the NMOS T2 and the PMOS T6. Transistors having gates connected to the SB terminal respectively constitutes the NMOS T3 and the PMOS T7. Transistors having gates connected to the B0 terminal respectively constitutes the NMOS T4 and the PMOS T8.

A source of the PMOS T5 is connected to the first power supply line VDD and a source of the PMOS T6. A drain of the PMOS T5 is connected to a drain of the PMOS T6, a source of the PMOS T7, and a source of the PMOS T8. A source of the NMOS T1 is connected to the second power supply line VSS. A drain of the NMOS T1 is connected to a source of the NMOS T2.

The drain of the PMOS T6 is connected to the drain of the PMOS T5, the source of the PMOS T7, and the source of the PMOS T8. The source of the NMOS T2 is connected to the drain of the NMOS T1. The drain of the NMOS T2 is connected to the drain of the PMOS T7 and the drain of the PMOS T8 through the drain of the NMOS T3 and the ZN0 terminal.

The source of the PMOS T7 is connected to the drain of the PMOS T5, the drain of the PMOS T6, and the source of the PMOS T8. The source of the NMOS T3 is connected to the drain of the NMOS T4. The drain of the NMOS T3 is connected to the drain of the PMOS T7, and the drain of the PMOS T8 through the drain of the NMOS T2 and the ZN0 terminal.

The source of the PMOS T8 is connected to the drain of the PMOS T5, the drain of the PMOS T6, and the source of the PMOS T7. The drain of the PMOS T8 is connected to the drain of the NMOS T2 and the drain of the NMOS T3 through the drain of the PMOS T7 and the ZN0 terminal. The source of the NMOS T4 is connected to the second power supply line VSS.

Fig. 2B illustrates that the semiconductor integrated circuit 100 illustrated in Fig. 1B is composed of the plurality of block circuits 10 in a layout. Specifically in the semiconductor integrated circuit 100, the first wiring 21 and the second wiring 22 are continuously wired between adjacent block circuits 10. That is, the first wiring 21 and the second wiring 22 are continuously wired between block circuits 10 adjacent to one another in the Y direction. The term "adjacent" used herein means that the block circuit 10 and the block circuit 10 are disposed in contact with one another.

Fig. 3 illustrates that first wiring 21 and the second wiring 22 illustrated in Fig. 1B are respectively the gates of the NMOS and PMOS constituted by the block circuit 10 in the layout, and are wirings to be connected to the terminals connected to the outside (SA terminal illustrated in Fig. 3). As illustrated in Fig. 3, the first wiring 21 is disposed so as to extend over the plurality of block circuits 10.

Fig. 4 illustrates that the first power supply line VDD and the second power supply line VSS illustrated in Fig. 2B (the second power supply line VSS in the case of Fig. 4) are connected to the NMOS and PMOS constituted by the block circuit 10. As illustrated in Figs. 3 and 4, the wirings between the source and the drains of the NMOS and PMOS constituting the block circuit 10 are connected with metallic wirings above the first wiring 21 and the second wiring.

Fig. 5 illustrates that four gates of the transistors are disposed, in the NMOS and PMOS (NMOS in the case of Fig. 5 ) constituting the block circuit 10 illustrated in Fig. 2A . As illustrated in Figs. 2B and 5, two NMOSs and two PMOSs are disposed in series between the first power supply line VDD and the second power supply line VSS.

As illustrated in Figs. 2A to 5, the semiconductor integrated circuit 100 includes the first power supply line VDD, the second power supply line VSS, and the block circuit 10 disposed between the first power supply line VDD and the second power supply line VSS. The plurality of block circuits 10 are arranged in the Y direction. The plurality of block circuits 10 are arranged lengthwise (X×Y:1×4).

As illustrated in Figs. 3 to 5, the semiconductor integrated circuit 100 includes a substrate 101.

The first wiring 21 and the second wiring 22 are disposed on the substrate 101. The first wiring 21 and the second wiring 22 each include polysilicon.

The A0 terminal to the A3 terminal, the B0 terminal to the B3 terminal, the SA terminal, the SB terminal, and the output terminals (ZNO to ZN3) in the semiconductor integrated circuit 100 are disposed as metal electrodes above the substrate 101 and the polysilicon.

The B terminal of the AND circuit 11 and the D terminal of the AND circuit 12 in the semiconductor integrated circuit 100 are each connected with the polysilicon in advance.

Fig. 6 illustrates a relationship between terminals that can be connected to an external terminal and terminals that can be omitted since the terminals are connected inside the semiconductor integrated circuit 100, in the semiconductor integrated circuit 100 illustrated with Fig. 2B.

As illustrated in Fig. 6, in the semiconductor integrated circuit 100, for example, three B terminals and three D terminals in the semiconductor integrated circuit 100 can be omitted by commonly connecting the B terminals and the D terminals of the plurality of block circuits inside the semiconductor integrated circuit 100. Moreover, in the semiconductor integrated circuit 100, by reducing the number of terminals that can be connected to the outside, it is possible to suppress an increase in the cell width since the terminals are not closely spaced.

### (Effects of First Embodiment)

According to the first embodiment, since wiring of the signal commonly supplied into the plurality of block circuits is arranged in the semiconductor integrated circuit in advance, it is possible to relieve confusion of the metallic wiring between cells when automatically wiring between cells.

Moreover, according to the first embodiment, the number of terminals per one block circuit can be reduced by relieving confusion of the metallic wiring, and thereby the cell width of the block circuit can be reduced.

Furthermore, according to the first embodiment, the cell areas of the semiconductor integrated circuit can be reduced by reducing the cell width of the block circuit, and thereby element density can be improved. Moreover, the chip area can be reduced by improving the element density.

### [Second Embodiment]

### (Configuration of Semiconductor Integrated Circuit)

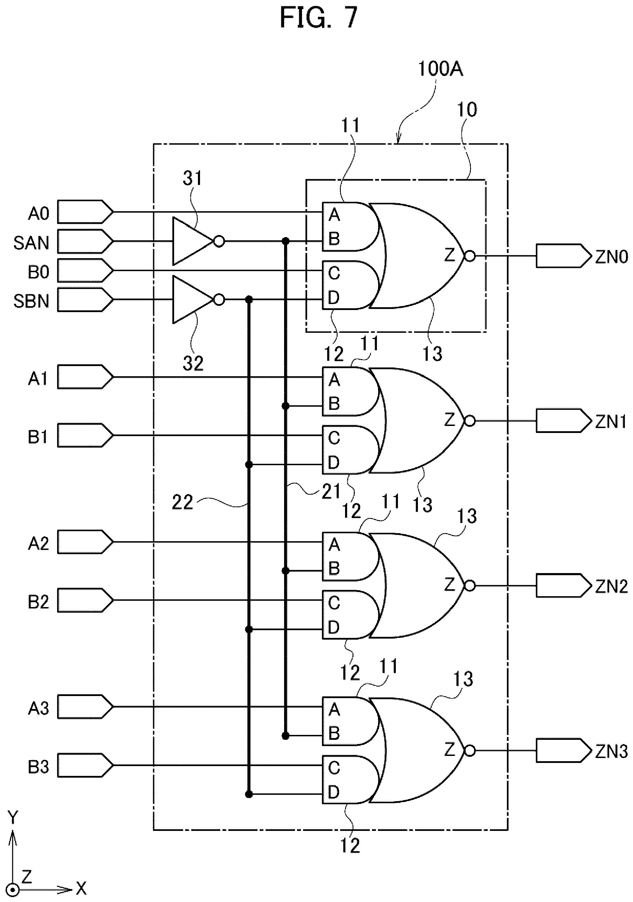

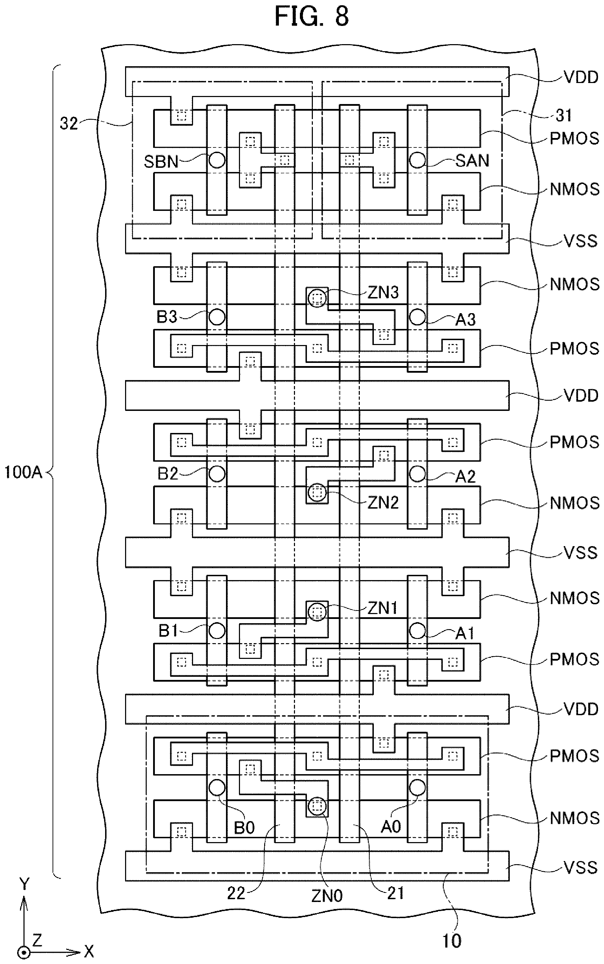

Fig. 7 is a logic circuit diagram illustrating a semiconductor integrated circuit 100A according to a second embodiment. Fig. 8 is a layout diagram illustrating the semiconductor integrated circuit 100A according to the second embodiment.

As illustrated in Fig. 7, the semiconductor integrated circuit 100A further includes a first inverter circuit 31 and a second inverter circuit 32, in addition to the semiconductor integrated circuit 100 according to the first embodiment according to the second embodiment. The rest of the configuration is the same as that of the semiconductor integrated circuit 100 according to the first embodiment.

An input of the first inverter circuit 31 is equivalent to a signal from an SAN terminal. An output of the first inverter circuit 31 is supplied to the B terminal of each of the plurality of AND circuits 11 through the first wiring 21.

An input of the second inverter circuit 32 is equivalent to a signal from an SBN terminal. An output of the second inverter circuit 32 is supplied to the D terminal of each of the plurality of AND circuits 12 through the second wiring 22.

A first end of the first inverter circuit 31 is electrically connected to the SAN terminal. A second end of the first inverter circuit 31 is connected to the AND circuits 11 through the first wiring 21. The second end of the first inverter circuit 31 is electrically connected to the B terminal of each of the plurality of AND circuits 11 through the first wiring 21.

A first end of the second inverter circuit 32 is electrically connected to the SBN terminal. A second end of the second inverter circuit 32 is connected to the AND circuits 12 through the second wiring 22. The second end of the second inverter circuit 32 is electrically connected to the D terminal of each of the plurality of AND circuits 12 through the second wiring 22.

As illustrated in Fig. 8, the semiconductor integrated circuit 100A includes the first power supply line VDD, the second power supply line VSS, and the block circuit 10 disposed between the first power supply line VDD and the second power supply line VSS. The plurality of block circuits 10 are arranged in the Y direction. The plurality of block circuits 10 are arranged lengthwise (X×Y:1×4).

In the layout arrangement of the semiconductor integrated circuit 100A, the first wiring 21 and the second wiring 22 are continuously wired between adjacent block circuits 10. That is, the first wiring 21 and the second wiring 22 are continuously wired between block circuits 10 adjacent to one another in the Y direction.

The first wiring 21 and the second wiring 22 are disposed on the substrate 101 similar to the first embodiment. The first wiring 21 and the second wiring 22 each include polysilicon.

The B terminal of the AND circuit 11 and the D terminal of the AND circuit 12 in the semiconductor integrated circuit 100A are each connected with the polysilicon in advance.

### (Effects of Second Embodiment)

According to the second embodiment, since wiring of the signal commonly supplied into the plurality of block circuits is arranged in the semiconductor integrated circuit in advance, it is possible to relieve confusion of the metallic wiring between cells when automatically wiring between cells.

Moreover, according to the second embodiment, the number of terminals per one block circuit can be reduced by relieving confusion of the metallic wiring, and thereby the cell width of the block circuit can be reduced.

Furthermore, according to the second embodiment, the cell areas of the semiconductor integrated circuit can be reduced by reducing the cell width of the block circuit, and thereby element density can be improved. Moreover, the chip area can be reduced by improving the element density.

### [Third Embodiment]

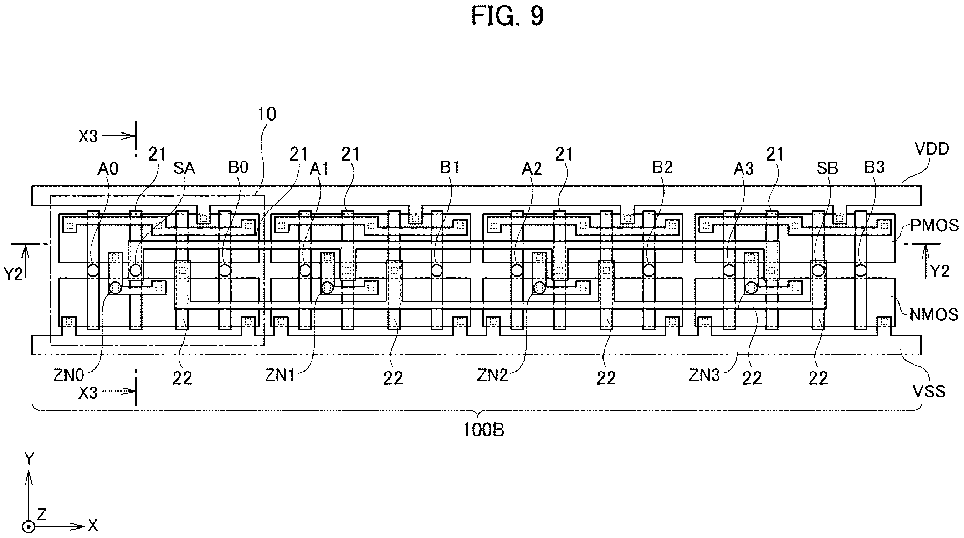

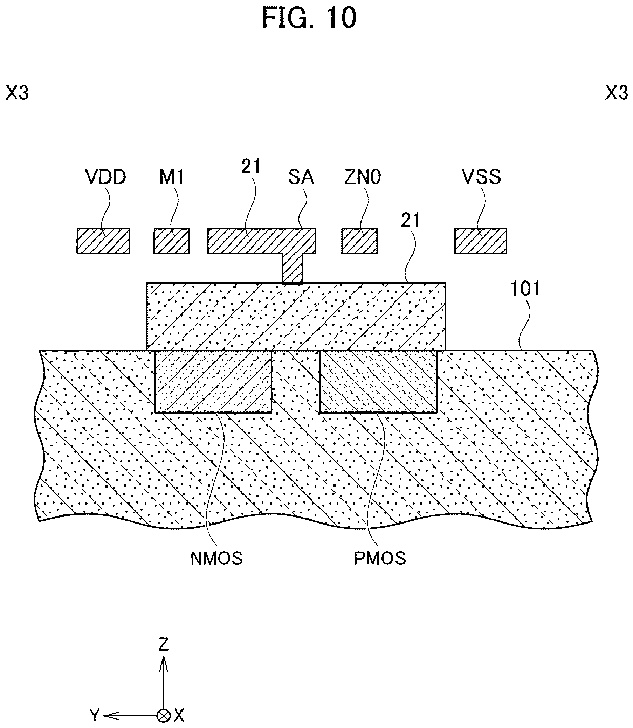

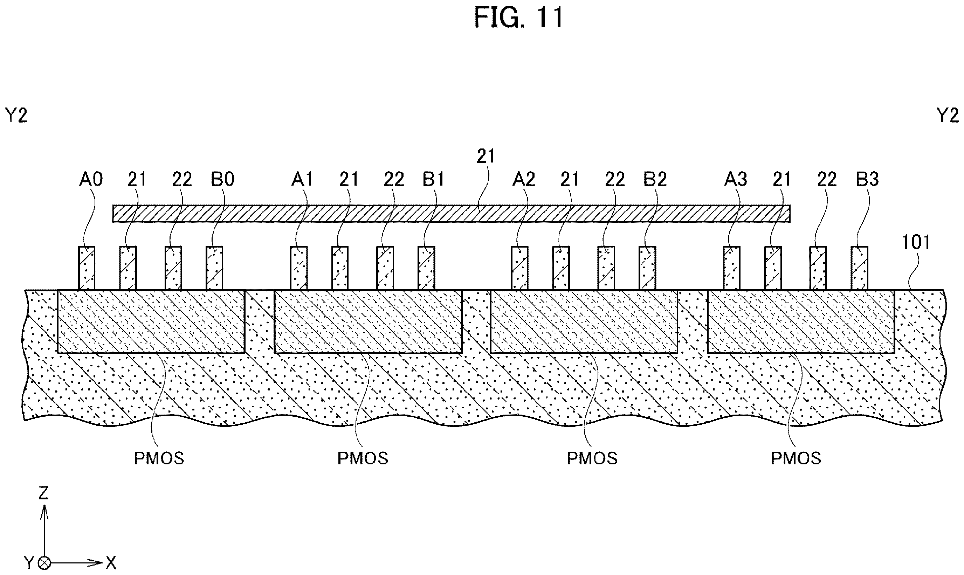

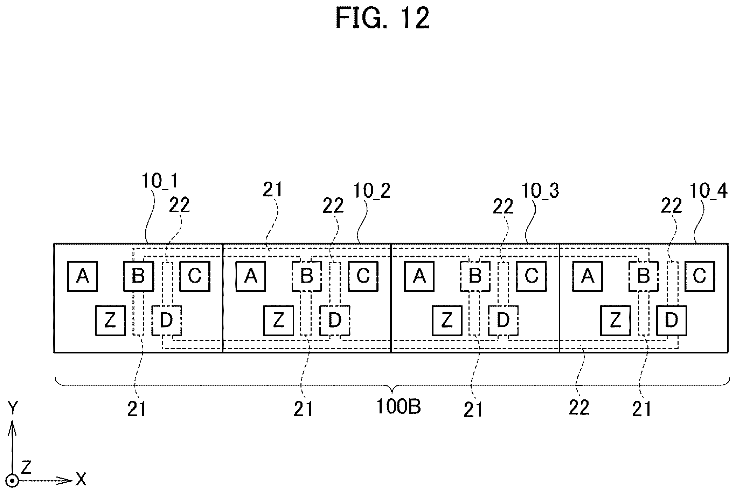

Fig. 9 is a layout diagram illustrating a semiconductor integrated circuit 100B according to a third embodiment. Fig. 10 is a cross-sectional diagram taken in the line X3-X3 of Fig. 9. Fig. 11 is a cross-sectional diagram taken in the line Y2-Y2 line of Fig. 9. Fig. 12 is a schematic diagram of a layout the semiconductor integrated circuit illustrated in Fig. 9.

Fig. 9 shows another example of a layout of a logic circuit diagram illustrating the semiconductor integrated circuit 100 according to the first embodiment illustrated in Fig. 1B.

Figs. 10 and 11 illustrate that the first wiring 21 and the second wiring 22 illustrated in Fig. 9 are each connected to the metallic wiring disposed above the polysilicon.

As illustrated in Fig. 9, in the layout arrangement of the semiconductor integrated circuit 100B according to the third embodiment, the plurality of block circuits 10 are arranged in the X direction, in contrast to a semiconductor integrated circuit 100 according to the first embodiment. The plurality of block circuits 10 are arranged widthwise (X×Y:4×1). The logic circuit diagram is the same as that of the semiconductor integrated circuit 100 according to the first embodiment.

Inside the semiconductor integrated circuit 100B, the first wiring 21 and the second wiring 22 are continuously arranged between adjacent block circuits 10, in the layout arrangement. That is, the first wiring 21 and the second wiring 22 are continuously arranged between block circuits 10 adjacent to one another in the X direction.

As illustrated in Figs. 9 to 11, the first wiring 21 and the second wiring 22 each include polysilicon disposed on the substrate 101. The first wiring 21 and the second wiring 22 each further include metallic wiring connected onto the polysilicon.

As illustrated in Figs. 9 to 10, the semiconductor integrated circuit 100B includes the substrate 101. The first wiring 21 and the second wiring 22 are disposed on the substrate 101. The first wiring 21 and the second wiring 22 each include polysilicon.

The A0 terminal to the A3 terminal, the B0 terminal to the B3 terminal, the SA terminal, the SB terminal, and the output terminals (ZNO to ZN3) in the semiconductor integrated circuit 100B are disposed as metal electrodes above the substrate 101 and the polysilicon, as illustrated in Fig. 11.

The B terminal of the AND circuit 11 and the D terminal of the AND circuit 12 in the semiconductor integrated circuit 100B are each connected with the polysilicon and the metallic wiring in advance.

Fig. 12 illustrates a relationship between terminals that can be connected to an external terminal and terminals that can be omitted since the terminals are connected inside the semiconductor integrated circuit 100B, in the semiconductor integrated circuit 100B illustrated with Fig. 9.

As illustrated in Fig. 12, in the semiconductor integrated circuit 100B, for example, three B terminals and three D terminals, that can be connected to the semiconductor integrated circuit 100B can be omitted by commonly connecting the B terminals and the D terminals of the plurality of block circuits inside the semiconductor integrated circuit 100B. Moreover, in the semiconductor integrated circuit 100B, by reducing the number of terminals, it is possible to suppress an increase in the cell width since the terminals are not closely spaced.

### (Effects of Third Embodiment)

According to the third embodiment, since the wiring of the signal commonly supplied into the plurality of block circuits is arranged in the semiconductor integrated circuit in advance, it is possible to relieve confusion of the metallic wiring between cells when automatically wiring between cells.

Moreover, according to the third embodiment, the number of terminals per one block circuit can be reduced by relieving confusion of the metallic wiring, and thereby the cell width of the block circuit can be reduced.

Furthermore, according to the third embodiment, the cell areas of the semiconductor integrated circuit can be reduced by reducing the cell width of the block circuit, and thereby element density can be improved. Moreover, the chip area can be reduced by improving the element density.

### [Fourth Embodiment]

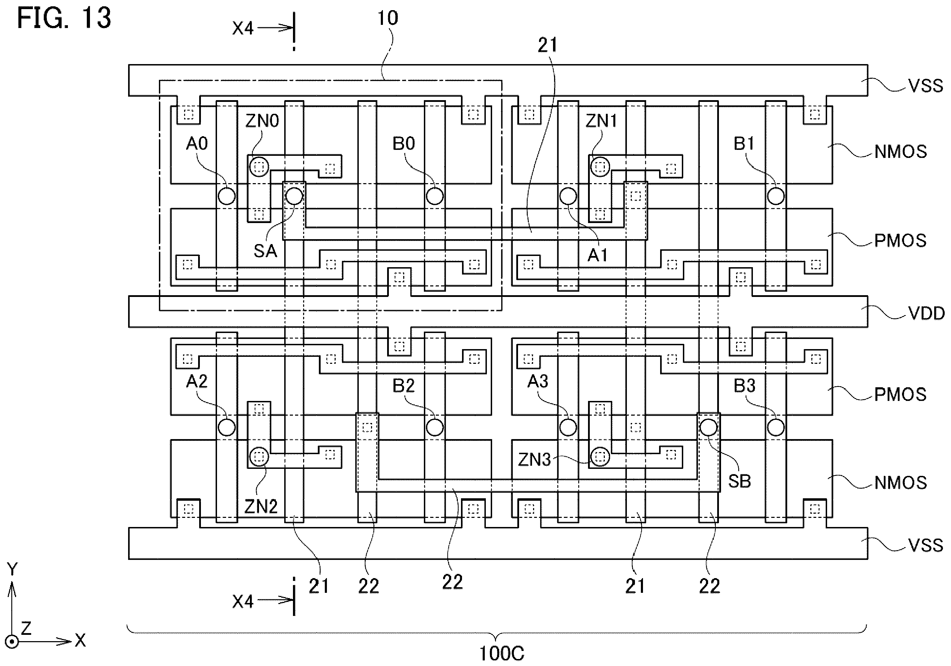

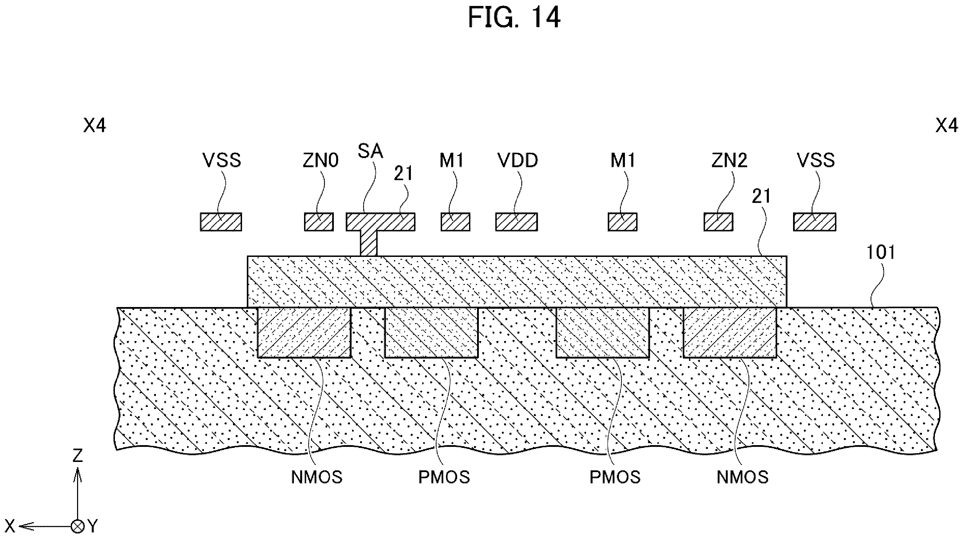

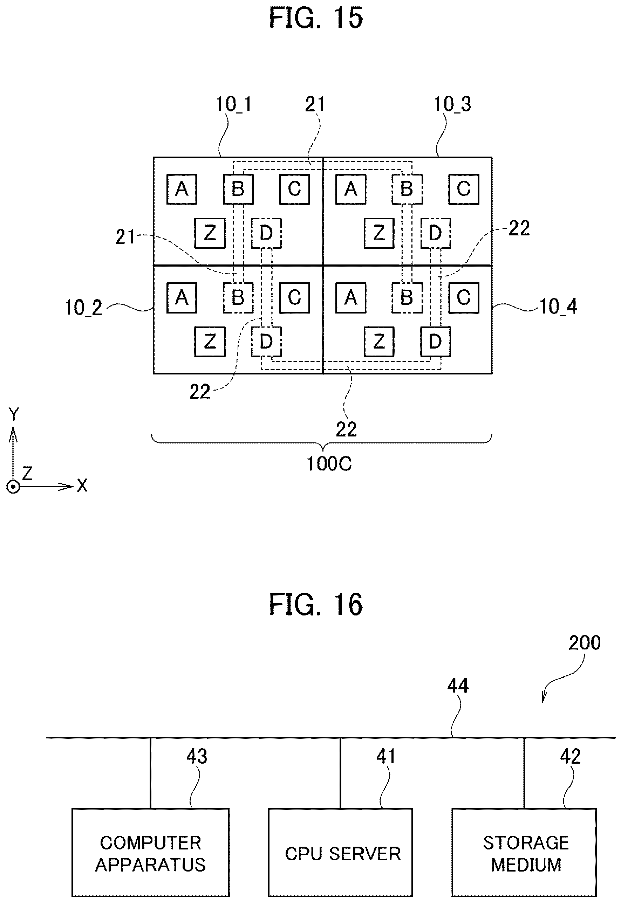

Fig. 13 is a layout diagram illustrating a semiconductor integrated circuit 100C according to a fourth embodiment. Fig. 14 is a cross-sectional diagram taken in the line X4-X4 of Fig. 13. Fig. 15 is a schematic diagram of a layout the semiconductor integrated circuit illustrated in Fig. 13.

Fig. 13 illustrates another example of a layout of a logic circuit diagram illustrating the semiconductor integrated circuit 100 according to the first embodiment illustrated in Fig. 1B.

Fig. 14 illustrates that the first wiring 21 and the second wiring 22 illustrated in Fig. 13 are each connected with the metallic wiring disposed above the polysilicon, similar to the layout of the semiconductor integrated circuit 100B according to the third embodiment.

As illustrated in Fig. 13, in the layout arrangement of the semiconductor integrated circuit 100C according to the fourth embodiment, the plurality of block circuits 10 are arranged in the X direction and the Y direction in a matrix, in contrast to the semiconductor integrated circuit 100 according to the first embodiment. That is, the plurality of block circuits 10 are arranged in a rectangular (X×Y:2×2). It is to be noted that the plurality of block circuits 10 may be arranged in a square shape when the array is 2×2. In addition, the logic circuit diagram is the same as that of the semiconductor integrated circuit 100 according to the first embodiment.

In the layout arrangement of the semiconductor integrated circuit 100C, the first wiring 21 and the second wiring 22 are continuously arranged between adjacent block circuits 10. That is, the first wiring 21 and the second wiring 22 are continuously arranged between block circuits 10 adjacent to one another in the Y direction.

As illustrated in Fig. 14, the semiconductor integrated circuit 100C includes the substrate 101. The first wiring 21 and the second wiring 22 are disposed on the substrate 101. The first wiring 21 and the second wiring 22 each include polysilicon. The first wiring 21 and the second wiring 22 each further include metallic wiring connected onto the polysilicon.

As illustrated in Figs. 13 and 14, the A0 terminal to the A3 terminal, the B0 terminal to the B3 terminal, the SA terminal, the SB terminal, and the output terminals (ZNO to ZN3) in the semiconductor integrated circuit 100 are disposed as metal electrodes above the substrate 101 and the polysilicon.

The B terminal of the AND circuit 11 and the D terminal of the AND circuit 12, each into which the signal is commonly supplied, are each wired with the polysilicon and the metallic wiring in advance, in the semiconductor integrated circuit 100C.

Fig. 15 illustrates a relationship between terminals that can be connected to an external terminal and terminals that can be omitted since the terminals are connected inside the semiconductor integrated circuit 100C, in the semiconductor integrated circuit 100C illustrated with Fig. 13.

As illustrated in Fig. 15, in the semiconductor integrated circuit 100C, for example, three B terminals and three D terminals, that can be connected to the semiconductor integrated circuit 100C can be omitted by commonly connecting the B terminals and the D terminals of the plurality of block circuits inside the semiconductor integrated circuit 100C. Moreover, in the semiconductor integrated circuit 100C, by reducing the number of terminals, it is possible to suppress an increase in the cell width since the terminals are not closely spaced.

### (Effects of Fourth Embodiment)

According to the fourth embodiment, since the wiring of the signal commonly supplied into the plurality of block circuits is arranged in the semiconductor integrated circuit in advance, it is possible to relieve confusion of the metallic wiring between cells when automatically wiring between cells.

Moreover, according to the fourth embodiment, the number of terminals per one block circuit can be reduced by relieving confusion of the metallic wiring, and thereby the cell width of the block circuit can be reduced.

Furthermore, according to the fourth embodiment, the cell areas of the semiconductor integrated circuit can be reduced by reducing the cell width of the block circuit, and thereby element density can be improved. Moreover, the chip area can be reduced by improving the element density.

### [Layout Design System]

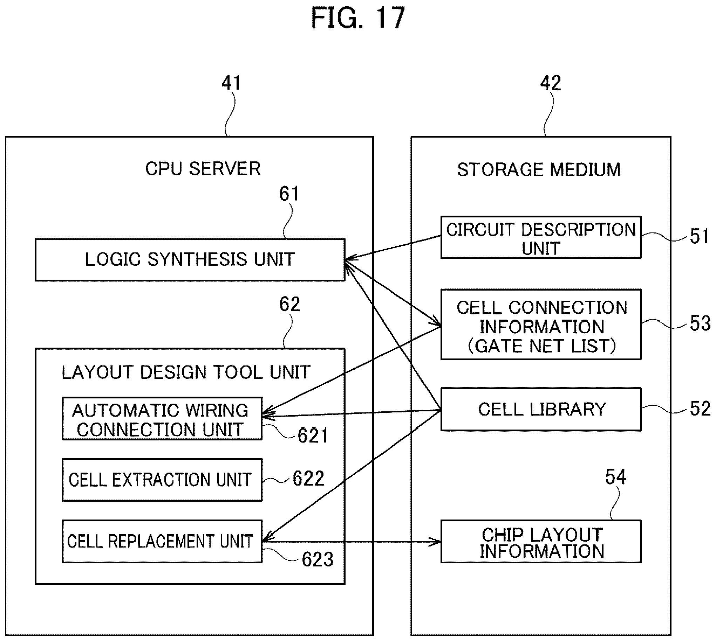

Fig. 16 is a schematic diagram illustrating a layout design system 200 using the semiconductor integrated circuit according to the embodiments. Fig. 17 is a block configuration diagram illustrating the layout design system 200 illustrated in Fig. 16.

The layout design system 200 to which the semiconductor integrated circuits according to the first to fourth embodiments are applied will now be described. It is to be noted that the semiconductor integrated circuit used for the layout design system 200 may be any of the semiconductor integrated circuits 100, 100A, 100B, and 100C according to the first to fourth embodiments. In the following description, the semiconductor integrated circuit 100 is also referred to as the first standard cell 100.

The layout design system 200 includes a Central Processing Unit (CPU) server 41, a storage medium 42, a computer apparatus 43, and a network 44, as illustrated in Fig. 16. In the following description, the central processing unit server 41 is also referred to as the CPU server 41.

In the layout design system 200, the CPU server 41, the storage medium 42, and the computer apparatus 43 operated by a user are connected to one another through the network 44. The CPU server 41 stores a computer program used for the layout design system 200. The storage medium 42 stores input information and output information required in order to execute the computer program used for the layout design system 200. The computer apparatus 43 is operated by the user.

The CPU server 41 may be, for example, an engineering workstation, a mainframe, a supercomputer, or the like. The storage medium 42 may be a non-transitory computer readable medium, such as, an external storage device such as a hard disk, a semiconductor storage device such as a memory, a storage medium. The computer apparatus 43 may be, for example, a Personal Computer (PC), a synclient terminal, a mobile terminal, a Personal Digital Assistant (PDA), or the like. The network 44 may be, for example, the Internet, intranet, Local Area Network (LAN), telephone communication networks, dedicated lines, or the like. In practice, however, it is not limited to these examples.

As illustrated in Fig. 17, the CPU server 41 includes a logic synthesis unit 61 and a layout design tool unit 62, each configured to execute the computer program used for the layout design system 200.

The logic synthesis unit 61 and the layout design tool unit 62 may be a processing apparatus of a CPU or microprocessor, for example. However, it is not limited to these examples.

The logic synthesis unit 61 is configured to perform logic synthesis of cell connection information 53 on the basis of information stored in the circuit description unit 51 and a cell library 52. The logic synthesis unit 61 provides the logically synthesized cell connection information 53 to the storage medium 42.

The layout design tool unit 62 includes an automatic wiring connection unit 621, a cell extraction unit 622, and a cell replacement unit 623. The layout design tool unit 62 provides chip layout information, after executing automatically wiring of the layout and replacement of the cell.

The automatic wiring connection unit 621 performs automatic wiring connection of cells on the basis of the cell connection information 53 and the information stored in the cell library 52. In addition, the chip layout information subjected to the automatic wiring connection may be stored in the storage medium 42.

The cell extraction unit 622 extracts a configuration of a cell using a plurality of block circuits 10. When the cell extraction unit 622 cannot replace the as-is configuration of the cell after the logic synthesis with the first standard cell 100, the cell extraction unit 622 replaces a pin terminal tip connected to the A terminal of the AND circuit 11 with a pin terminal tip connected to the B terminal of the AND circuit 11, in which a logic of the block circuit 10 is not changed by both terminals before and after the logic synthesis. Similarly, the cell extraction unit 622 replaces a pin terminal tip connected to the C terminal of the AND circuit 12 with a pin terminal tip connected to the D terminal of the AND circuit 12, in which a logic of the block circuit 10 is not changed by both terminals before and after the logic synthesis. That is, in the cell configuration in which the cell cannot be replaced in the state after the logic synthesis, the cell extraction unit 622 replaces the pin terminals with each other in which a logic is not changed before and after the logic synthesis.

When there is a signal commonly supplied into the plurality of extracted block circuits 10, the cell replacement unit 623 reads information of the first standard cell 100 from the cell library 52, and replaces the configuration of the cell using the plurality of block circuits 10 with the first standard cell 100. In addition, the automatic wiring connection unit 621 may perform automatic wiring connection for the first standard cell 100 on the basis of the information of the first standard cell 100, after the cell replacement.

The storage medium 42 includes the circuit description unit 51, the cell library 52, the cell connection information 53 (also referred to as the gate net list.), and the chip layout information 54.

The circuit description unit 51 is a circuit design data file described with, for example, Register Transfer Level (RTL). The circuit description unit 51 is an example of input information required for executing the computer program used for the layout design system 200.

The cell library 52 includes a cell prepared considering a simple logic function as a basic unit, and the first standard cell 100.
The cell library 52 is an example of input information required for executing the computer program used for the layout design system 200.

The cell connection information 53 is a circuit design data file described with, for example, a gate level provided after the logic synthesis. The cell connection information 53 is an example of input information required for executing the computer program used for the layout design system 200.

The chip layout information 54 is a circuit pattern data file for arranging the circuit on the substrate 101, for example. The chip layout information 54 is an example of output information required for executing the computer program used for the layout design system 200.

### (Effects of Layout Design System)

As described above, wiring congestion during the automatically wiring between cells can be relieved by replacing the cell with the first standard cell (i.e., semiconductor integrated circuit) by performing the layout design using the semiconductor integrated circuit according to the embodiments.

### [Layout Designing Method]

A layout designing method to which the semiconductor integrated circuit according to the first to fourth embodiments is applied will now be described.

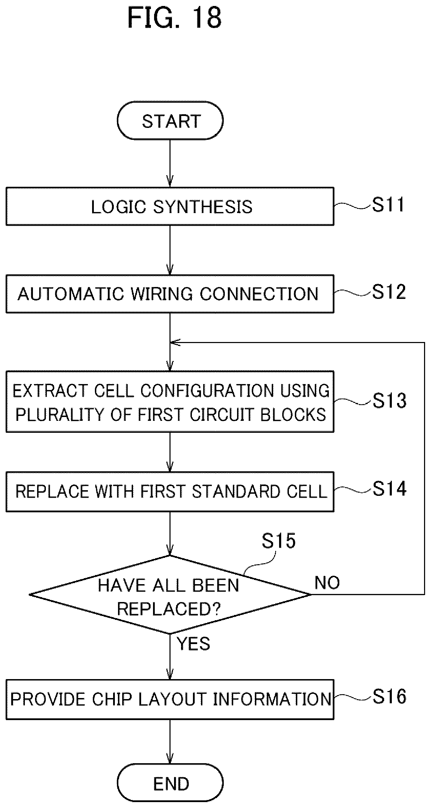

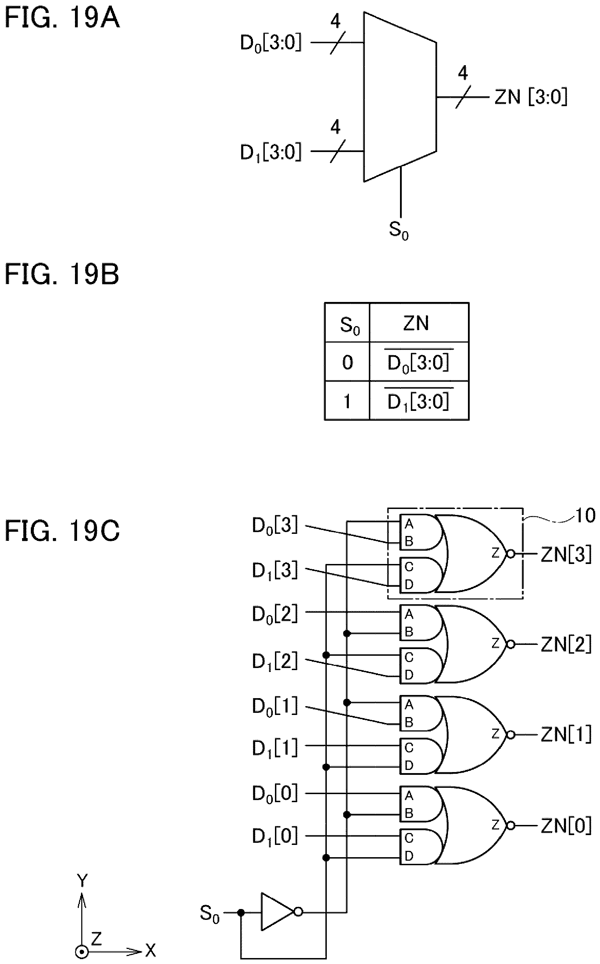

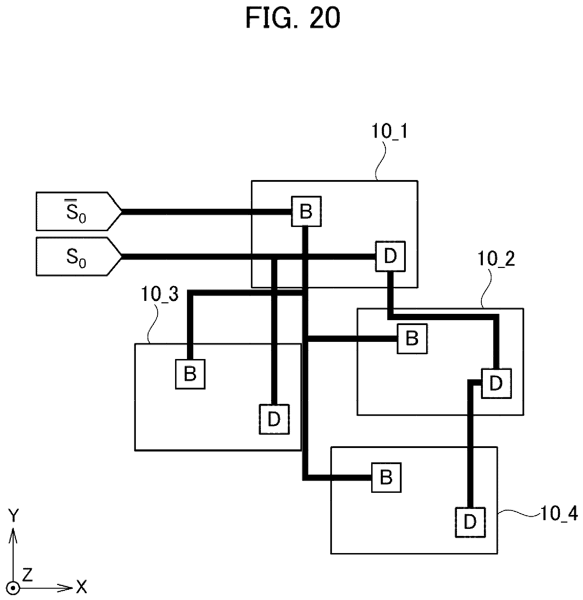

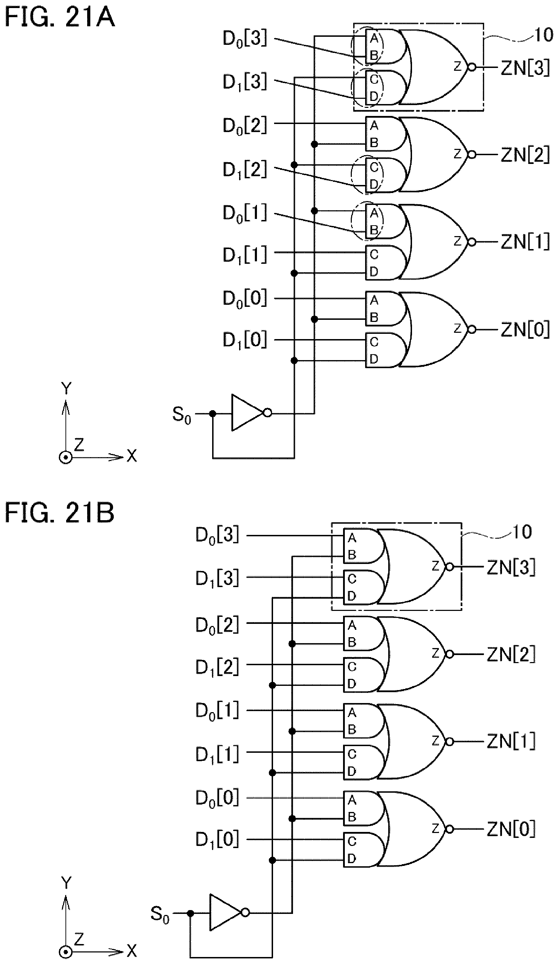

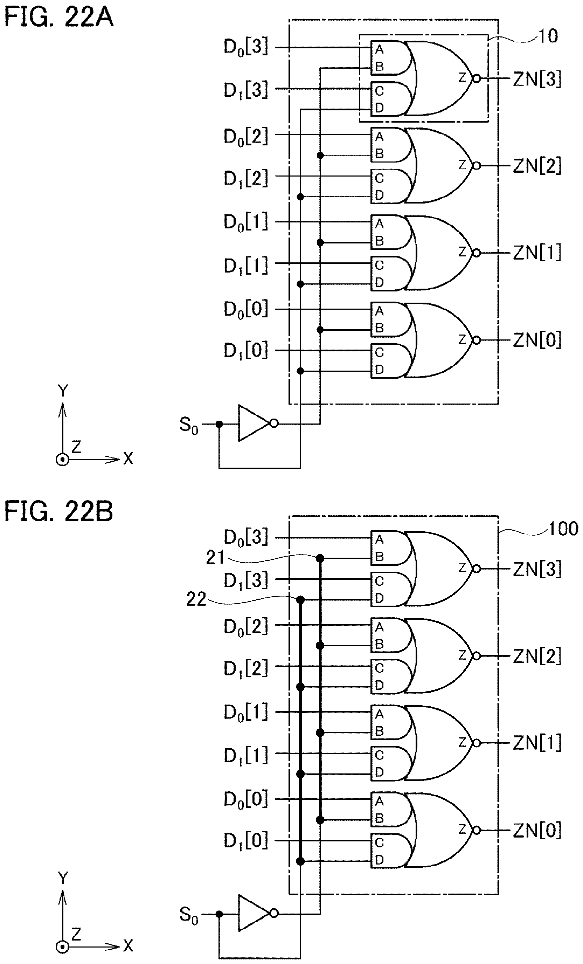

Fig. 18 is a flow chart illustrating the layout designing method to which the semiconductor integrated circuit according to the embodiments is applied.
(A) First, in Step S11, the logic synthesis unit 61 in the layout design system 200 performs logic synthesis of the cell connection information 53 on the basis of information stored in the circuit description unit 51 and the cell library 52. The details of the logic synthesis will be described later with reference to Figs. 19A to 19C.
(B) Next, in Step S12, the automatic wiring connection unit 621 in the layout design system 200 automatically connects wiring of each terminal between the block circuit 10 and the block circuit 10 in layout arrangement. The details of the automatically wiring will be described later with reference to Fig. 20.
(C) Next, in Step S13, the cell extraction unit 622 in the layout design system 200 extracts a configuration of a cell using a plurality of block circuits 10. Moreover, in the cell configuration in which the cell cannot be replaced in the state after the logic synthesis, the cell extraction unit 622 replaces the pin terminals with each other in which a logic is not changed before and after the logic synthesis. The details of the terminal replacement will be described later with reference with Figs. 21A to 21B.
(D) Next, in Step S14, the cell replacement unit 623 in the layout design system 200 replaces with the first standard cell 100 the configuration of the cell using the plurality of block circuits 10. The details of the cell replacement will be described later with reference with Figs. 22A to 22B.
(E) Next, in Step S15, if the replacement processes have all been completed with respect to the configuration of the cells extracted, in the cell connection information 53 of the layout design system 200 (in the case of YES in S15), the process proceeds to Step S16. If all the replacement processes have not been completed with respect to the configuration of the extracted cells (in the case of NO in S15), the process returns to Step S13.
(F) Next, in Step S16, the layout design system 200 stores the chip layout information 54 to the storage medium 42. Then, the process is ended after the storing of the chip layout information.

Fig. 19A illustrates a circuit representation of a 4-bit width two-input multiplexer (MUX). Fig. 19B illustrates a truth table of the MUX in Fig. 19A. Fig. 19C is a cell connection diagram after logic synthesis of the MUX in Fig. 19A.

Logic synthesis of the 4-bit width two-input MUX will now be described with reference to Figs. 19A to 19C.

The circuit representation of the 4-bit width two-input MUX illustrated in Fig. 19A corresponds to information described in the circuit description unit 51. Fig. 19B illustrates the truth table of the 4-bit width two-input MUX. The circuit representation of the 4-bit width two-input MUX is an example of the information described in the circuit description unit 51. The circuit described in the circuit description unit 51 may be an n-bit width m-input MUX (where m and n are integers).

The logic synthesis unit 61 stores, to the storage medium 42, the cell connection information 53 illustrated in Fig. 19C synthesized on the basis of the circuit description unit 51 illustrated in Fig. 19A and the cell library 52, for example. As illustrated in Fig. 19C, the cell connection information 53 to be stored is circuit information described with the gate level after the logic synthesis using a cell prepared as a basic unit in a simple logic function.

A layout schematic diagram using the cell prepared as a basic unit in the simple logic function will now be described with reference to Fig. 20. In Fig. 20, illustration of the terminals except for the B terminal and the D terminal are omitted, in the cell of the plurality of block circuits 10.

Fig. 20 is a layout schematic diagram illustrating the cell after performing an automatic wiring connection between cells. Fig. 21A is a cell connection diagram describing replacing terminals to be supplied into an AND circuit. Fig. 21B is a cell connection diagram after the terminal replacement of the cell illustrated in Fig. 21A.

As illustrated in Fig. 20, when the cell prepared as the basic unit in the simple logic function is used, and the terminals of the plurality of block circuits 10 (10_1, 10_2, 10_3, 10_4) are connected by the automatically wiring, since there are many numbers of terminals of the block circuits, automatically wiring connections are congested.

The terminal replacement of the block circuits 10 will now be described with reference to Figs. 21A and 21B.

The cell configuration illustrated in Fig. 21A corresponds to a configuration of a cell that cannot be replaced with the first standard cell 100. Therefore, the cell extraction unit 622 replaces, for example, a pin terminal tip S₀ connected to the A terminal of the AND circuit 11 with a pin terminal tip D₀[3] connected to the B terminal of the AND circuit 11, in which a logic of the block circuit 10 is not changed by both terminals before and after the logic synthesis. Similarly, the cell extraction unit 622 replaces a pin terminal tip S₀ connected to the C terminal of the AND circuit 12 with a pin terminal tip D₁[3] connected to the D terminal of the AND circuit 12, in which a logic of the block circuit 10 is not changed by both terminals before and after the logic synthesis. Moreover, the cell extraction unit 622 replaces a pin terminal tip S₀ connected to the C terminal of the AND circuit 12 with a pin terminal tip D₁[2] connected to the D terminal of the AND circuit 12. Furthermore, the cell extraction unit 622 replaces a pin terminal tip S₀ connected to the A terminal of the AND circuit 11 with a pin terminal tip D₀[1] connected to the B terminal of the AND circuit 11.

That is, in the cell configuration in which the cell cannot be replaced in the state after the logic synthesis, the cell extraction unit 622 replaces the pin terminals with each other in which a logic is not changed before and after the logic synthesis.

As illustrated in Fig. 21B, the cell configuration is changed to a cell configuration that can be replaced with the first standard cell 100, by the cell extraction unit 622.

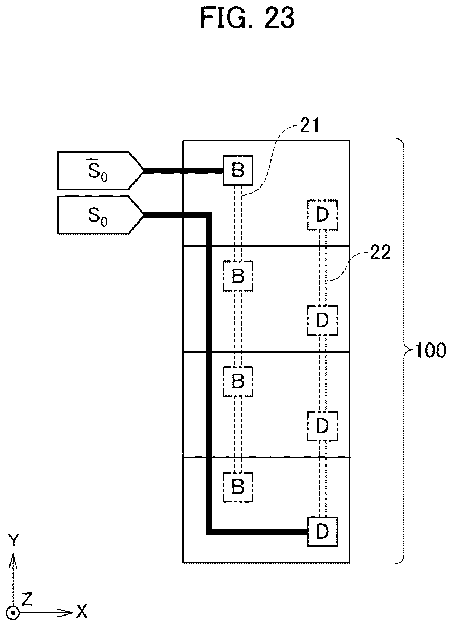

Fig. 22A is a configuration diagram illustrating a cell to be extracted. Fig. 22B is a configuration diagram illustrating the cell after the replacement. Fig. 23 is a layout diagram after the cell replacement.

The replacement with the first standard cell will now be described with reference to Figs. 22A and 22B.

The cell configuration illustrated in Fig. 22A corresponds to a configuration of the cell that can be replaced with the first standard cell 100. After replacing and extraction of the terminals, when there is a signal commonly supplied into the plurality of extracted block circuits 10, the cell replacement unit 623 reads information of the first standard cell 100 from the cell library 52, and replaces the configuration of the cell using the plurality of block circuits 10 with the first standard cell 100, as shown in Fig. 22B. In addition, the automatic wiring connection unit 621 may perform automatically wiring of the layout information again, after the cell replacement.

The layout schematic diagram using the first standard cell will now be described with reference to Fig. 23. In Fig. 23, illustration of the terminals except for the B terminal and the D terminal are omitted, in the cell of the plurality of block circuits 10.

The chip layout information 54 illustrated in Fig. 23 is replaced with the information of the first standard cell 100, in the layout arrangement.

In the chip layout information 54, by using a first standard cell 100, the number of the B terminals and the number of the D terminals in the plurality of block circuit 10 are reduced (three B terminals and three D terminals are reduced to one B terminal and one D terminal) as the connecting terminals, and thereby automatically wiring congestion is relieved. Moreover, since the automatically wiring congestion is relieved, an element density of the chip layout information 54 is improved, and thereby the chip area is reduced.

### [Other Embodiments]

While certain embodiments have been described, these embodiments have been presented by way of example only, and are not intended to limit the scope of the inventions. Indeed, the novel circuits, systems, methods, and storage medium described herein may be embodied in a variety of other forms; furthermore, various omissions, substitutions and changes in the form of the embodiments described herein may be made without departing from the spirit of the inventions. Although embodiments may have been described individually, this should not mean that they are separate teachings. Specifically, elements that have been described for any one of the first to fourth embodiment may be combined with elements of another one of these embodiments. The accompanying claims and their equivalents are intended to cover such forms or modification.

For example, two AND circuits and a logic circuit in the case of one NOR described a block circuit in a configuration of several semiconductor integrated circuits according to the embodiments of this above-mentioned disclosure, but in contrast, a logic circuit may be a block circuit which made 0 and 1 reverse by a binary number. For example, a block circuit formed by combining an OR circuit, an AND circuit, and an inverter circuit can also be applied.

## Claims

1. A semiconductor integrated circuit comprising:
a first power supply line extending in a first direction;
a second power supply line extending in the first direction parallel to the first power supply line;
a block circuit disposed between the first power supply line and the second power supply line, the block circuit comprising a first logic circuit to which a first input and a second input are supplied, a second logic circuit to which a third input and a fourth input are supplied, and a third logic circuit to which an output from the first logic circuit and an output from the second logic circuit are supplied;
a first wiring extending in a second direction orthogonal to the first direction; and
a second wiring extending in the second direction parallel to the first wiring, wherein
any one of the first input or the second input is connected to the first wiring, in the first logic circuit, and any one of the third input or the fourth input is connected to the second wiring, in the second logic circuit.

2. A semiconductor integrated circuit according to claim 1, wherein
a plurality of the block circuits are provided, wherein
in the plurality of block circuits, any one of the first input or the second input in the first logic circuit is commonly connected to the first wiring, and any one of the third input or the fourth input in the second logic circuit is commonly connected to the second wiring.

3. A semiconductor integrated circuit according to claim 2, wherein
the plurality of block circuits are arranged in the first direction.

4. A semiconductor integrated circuit according to claim 2, wherein
the plurality of block circuits are arranged in the second direction.

5. A semiconductor integrated circuit according to claim 2, wherein
the plurality of block circuits are arranged in the first direction and in the second direction.

6. A semiconductor integrated circuit according to any one of claims 1 to 5, further comprising:
a first inverter circuit connected to the first logic circuit through the first wiring; and
a second inverter circuit connected to the second logic circuit through the second wiring.

7. A semiconductor integrated circuit according to any one of claims 1 to 6, wherein
the first logic circuit and the second logic circuit each comprise an AND circuits, and
the third logic circuit comprises an NOR circuit.

8. A semiconductor integrated circuit according to any one of claims 1 to 7, further comprising
a substrate, wherein
the first wiring and the second wiring each comprise polysilicon disposed on the substrate.

9. A semiconductor integrated circuit according to claim 8, wherein
the first wiring and the second wiring each further comprises a metallic wiring disposed on the polysilicon, the metallic wiring being electrically connected to the polysilicon.

10. A layout design system comprising:
a logic synthesis unit configured to perform logic synthesis of cell connection information on the basis of information stored in a circuit description unit and a cell library; and
a layout design tool unit comprising an automatic wiring connection unit, a cell extraction unit, and a cell replacement unit, wherein:
the automatic wiring connection unit is configured to perform automatic wiring connection of a cell on the basis of the cell connection information and the information stored in the cell library;
the cell extraction unit is configured to extract a configuration of a cell using a plurality of block circuits; and
the cell replacement unit, when there is a signal commonly supplied into the plurality of extracted block circuits, is configured to read information of a first standard cell from the cell library, to replace the configuration of the cell using the plurality of block circuits with the first standard cell, and to provide chip layout information.

11. A layout design system according to claim 10, wherein
in a cell configuration in which the cell cannot be replaced in a state after the logic synthesis, the cell extraction unit replaces pin terminals with each other in which a logic is not changed before and after the logic synthesis.

12. A layout design method used for a layout design system, the layout design method comprising:
performing logic synthesis of cell connection information on the basis of information stored in a circuit description unit and a cell library;
performing automatic wiring connection of the cell on the basis of the cell connection information and the information stored in the cell library;
extracting, by a cell extraction unit, a configuration of the cell using a plurality of block circuits; and
when there is a signal commonly supplied into the plurality of extracted block circuits, reading information of a first standard cell from the cell library, replacing the configuration of the cell using the plurality of block circuits with the first standard cell, and providing chip layout information.

13. The layout design method according to claim 12, further comprising
in a cell configuration in which the cell cannot be replaced in a state after the logic synthesis, replacing pin terminals with each other in which a logic is not changed before and after the logic synthesis.

14. A non-transitory computer-readable medium in which a computer program is stored, the computer program being executed by a computer used for a layout design system, the computer program comprising:
performing logic synthesis of cell connection information on the basis of information stored in a circuit description unit and a cell library;
performing automatic wiring connection of the cell on the basis of the cell connection information and the information stored in the cell library;
extracting a configuration of the cell using a plurality of block circuits; and
when there is a signal commonly supplied into the plurality of extracted block circuits, reading information of a first standard cell from the cell library, replacing the configuration of the cell using the plurality of block circuits with the first standard cell, and providing chip layout information.

15. The non-transitory computer-readable medium according to claim 14, the computer program further comprising
in a cell configuration in which the cell cannot be replaced in a state after the logic synthesis, replacing pin terminals with each other in which a logic is not changed before and after the logic synthesis.
